# EUROPEAN PATENT APPLICATION

(11) **EP 1 800 769 A1**
(43) Date of publication of application: **27.06.2007**
(21) Application number: 05028539.4
(22) Date of filing: 22.12.2005
(51) Int. Cl.: B21D 37/14, H02J 5/00, H02J 7/02

(54) **Press die with a contactless power supply, production system comprising same and method for supplying electrical power to said die**

(71) Applicant: ABB RESEARCH LTD., 8050 Zürich (CH)
(72) Inventor: Gentzell, Tobias, 724 82 Västeras (SE); Kjellsson, Jimmy, 723 44 Västeras (SE); Frey, Jan-Erik, 723 48 Västeras (SE); Strand, Martin, 722 46 Västeras (SE)
(74) Representative: Dahlstrand, Björn

(57) **Abstract**

The invention is a die (22b) for an industrial press (1) arranged with a wireless communication device (14) and a contactless power supply (10,12). Power and/or control cables are not necessary between a stationary press (1) and the die (22b) or other moving part arranged with the press (1). One or more sensors on the moving part of the die (22b) may be contactlessly powered and wirelessly controlled. The wireless communication member (14) of the die (22b) may transmit data from one or more sensors on the die (22b) to a press control unit (24) or other control unit (25). The power supply (10,12) includes a primary power supply member (2,8) and secondary power supply member (13,15). In other aspects of the invention a method and a system are described.

## Description

### TECHNICAL FIELD.

The present invention concerns a die of the type used in an industrial press and a production system comprising such an industrial press with the die. The invention relates in particular to a die arranged with a wireless communication means.

### BACKGROUND ART

US 5,755,653 to Nishida (Komatsu) entitled Method of exchanging die sets in a press system, describes a method for changing dies including a carrier vehicle for moving die sets in or out of a press. US 6,567,761 to Modesto (Rockwell) entitled In-die part measurement system, describes a part measurement system including a press, a part measurement sensor and a press controller. It also describes that the part measurement sensor is arranged in a lower die part of a die set. The press controller processes a measurement signal from the part measurement sensor for a dimension of the part and generates a command to accept or reject the part.

When die sets are exchanged, moved in or out of a press, there can arise heavy wear and tear on the die and press during the exchange operations. Heavy wear and tear of signal and power supply cables to a die or rotating/moveable part of the die demands periodic maintenance and or replacement. The maintenance may lead to costly production down time. As a result, a complex and potentially expensive physical and/or mechanical construction has to be provided to minimize or relieve the strain on cabling and minimise wear on contactors.

### SUMMARY OF THE INVENTION

An embodiment of the present invention provides an improved mould or die for an industrial press for forming, stamping or pressing of metal or plastic parts, which said die is arranged to be mounted in and removed from said press, and wherein said die is arranged with at least one wireless communication member.

According to another embodiment of the present invention an improved mould or die for an industrial press is provided wherein said die is arranged with at least one wireless communication member and a contactless power supply, which wireless communication member is arranged powered directly or indirectly by the contactless power supply.

Another embodiment of the present invention provides an improved mould or die for an industrial press wherein the contactless power supply comprises an intermediate power storage means.

According to another embodiment of the present invention an improved mould or die for an industrial press is provided wherein said die is arranged with intermediate power storage means comprising a capacitive power storage means or a rechargeable battery which may be powered or charged by the contactless power supply.

Another embodiment of the present invention provides an improved mould or die for an industrial press wherein said die comprises one or more sensors connected to the wireless communication member.

Another embodiment of the present invention provides an improved mould or die for an industrial press wherein said die comprises one or more actuators connected to the wireless communication member.

Another embodiment of the present invention provides an improved mould or die for an industrial press wherein said die comprises at least one I/O node and which may be connected to the wireless communication member.

Another embodiment of the present invention provides an improved mould or die wherein the at least one wireless communication member is powered by a contactless power supply arranged with said die.

An embodiment of the present invention provides an improved mould or die for an industrial press for forming, stamping or pressing of metal or plastic parts which die comprises a wireless communication member which further comprises means for bi-directional communication.

An embodiment of the present invention provides an improved mould or die for an industrial press for forming, stamping or pressing of metal or plastic parts which comprises one or more sensors connected to an I/O node of the die.

According to another embodiment of the invention an improved mould or die for an industrial press for forming, stamping or pressing of metal or plastic parts which is provided which comprises at least one actuator.

An embodiment of the present invention provides an improved mould or die for an industrial press for forming, stamping or pressing of metal or plastic parts which comprises at least one wireless communication means which is connected to a plurality of sensors.

According to another embodiment of the invention an improved mould or die for an industrial press for forming, stamping or pressing of metal or plastic parts which is provided which comprises a contactless power supply which is powered by means of a device for electromagnetic induction.

Another embodiment of the present invention provides an improved mould or die for an industrial press which comprises one or more coils for induction of a time-varying voltage arranged connected relative a power supply arranged with said die.

According to another embodiment of the invention an improved mould or die for an industrial press is provided with a wireless communication member compatible with a wireless radio protocol.

According to another embodiment of the invention an improved mould or die for an industrial press for forming, stamping or pressing of metal or plastic parts is provided which said die comprises means for wireless transmission of data directly to a control unit or indirectly to a control unit via a network from at least one sensor and/or actuator and/or I/O node arranged with said die.

According to another embodiment of the invention an improved mould or die for an industrial press for forming, stamping or pressing of metal or plastic parts which is provided wherein the wireless communication member of said die is arranged with means for wireless transmission of data to a data network and/or a control unit from at least one sensor and/or actuator arranged with said die.

According to another embodiment of the invention an improved mould or die for an industrial press for forming, stamping or pressing of metal or plastic parts which is provided wherein any of a sensor, actuator, I/O node or wireless communication means of said die comprises a memory storage means which may be written to and/or read from.

In another aspect of the invention a method is provided for supplying electrical power to an improved mould or die mounted in a press for forming, stamping or pressing of metal or plastic parts which said die is arranged to be mounted in and removed from a said press and is provided with electrical power by means of a contactless power supply, to at least one wireless communication member by means of a secondary power supply arranged on the die.

According to another embodiment of the invention a method is provided for supplying electrical power to an improved mould or die mounted in an industrial press which also comprises providing electrical power to at least one wireless communication member and powering communication of signals from at least one sensor means to a control unit of the press.

According to another embodiment of the invention a method is provided for supplying electrical power to an improved mould or die mounted in an industrial press which also comprises providing electrical power to the at least one wireless communication member and powering communication of signals from and/or to any of a sensor and/or actuator and/or I/O module arranged on the die.

According to another embodiment of the invention a method is provided for supplying electrical power to an improved mould or die to be mounted in an industrial press which also comprises providing electrical power to the at least one wireless communication member and powering communication of signals from and/or to any of a sensor and/or actuator and/or I/O module arranged on the die by means of charging an intermediate Storage device comprised in said die.

In another aspect of the invention a system comprising at least one press and at least one mould or die for forming, stamping or pressing of metal or plastic parts is provided, which said die is arranged to be mounted in and removed from said press, the system further comprising a control unit for controlling operations with said press, wherein said die is arranged with a contactless power supply means, and a wireless communication member for communication with a said control unit.

According to another embodiment of the invention a system comprising at least one press and a mould or die is provided, wherein said press is arranged with a wireless communication member and a contactless power supply means arranged on or near the press, which contactless power supply means is arranged for direct or indirect power supply to the wireless communication member.

According to another embodiment of the invention a system comprising at least one press and a mould or die is provided, wherein the contactless power supply for at least one die comprises an intermediate power storage means.

According to another embodiment of the invention a system comprising at least one press and a mould or die is provided, wherein the intermediate power storage means comprises a capacitive power storage means or a rechargeable battery which are powered or charged by the contactless power supply.

According to another embodiment of the invention a system comprising at least one press and a mould or die is provided, wherein said die is arranged with a contactless power supply means connected to a wireless communication member.

According to another embodiment of the invention a system comprising at least one press and a mould or die is provided, wherein any of a sensor, actuator, I/O node or wireless communication means of at least one said die comprises a memory storage means which may be written to and/or read from.

According to another embodiment of the invention a system comprising at least one press and a mould or die is provided, wherein means for reading or writing information dependent on said die, such as die identification information for example, to a memory means of at least one wireless communication member, sensor, I/O node or actuator arranged the said die.

According to another embodiment of the invention a system comprising at least one press and at least one mould or die is provided wherein said die is arranged mounted in the press such that there is no direct contact between the primary contactless power supply means on the press and the secondary power supply means arranged on or in the die.

According to another embodiment of the invention a system comprising at least one press and a mould or die is provided, wherein said die is arranged mounted in the press such that there is an air gap between the primary contactless power supply means on the press and the secondary power supply means on said die.

According to another embodiment of the invention a system comprising at least one press and a mould or die is provided, wherein said die is arranged with at least one sensor means.

According to another embodiment of the invention a system comprising at least one press and a mould or die is provided, wherein said press is arranged with at least one other moveable equipment comprising a contactless power supply associated with press operations with said die, which equipment may be any from the list of: transfer system, turntable, automatic tool changing system.

According to another embodiment of the invention a system comprising at least one press and a mould or die is provided, wherein the system includes at least one other moveable equipment which comprises a wireless communication member.

To summarise the invention may be simply described as an improved press die as well as providing a fully wireless system concept for moveable and/or rotating equipment in an industrial environment, with regard to both power supply and communication. It may be applied to moveable/rotating equipment for a production cell in general, as well as a die of a press machine. The industrial moveable/rotating equipment can be transfer systems, turntables, automatic die changing systems etc..

According to one or more embodiments the invention provides improved reliability and reduced maintenance requirements by eliminating the cabling and connections for signal communication and power supply for sensors and actuators in the press die. The power to the die may be provided via a contactless power supply using, according to an embodiment, using for example a "coil approach". This is where one powered coil is mounted on the stationary side of the equipment and one power receiving coil on the moving side, with a distance, an air gap between the stationery powered coil and the receiving coil. The contactless power supply may in other embodiments be used to charge an intermediate power storage device in the die. In situations where it is advantageous a re-chargeable battery or a capacitor supplies power indirectly from the contactless power supply. The wireless signal communication is handled via a wireless link directly between one or more sensors and a wireless node or between the I/O module and a wireless node or, for example, a base station connected to a network.

A principal advantage of the invention is that the contactless power supply and wireless communication to the die or die set means that the die requires neither power cabling nor control cabling to gather sensor information. This makes the die more easily maneuverable, as there are no electrical power or data plugs or cables to be disconnected from the die. There are correspondingly no plugs or cables to protrude or trail and in a factory environment easily become damaged.

This makes automation of die changing simpler, quick and more predictable. No communication connections or electrical power cables need to be disconnected or re-connected in order to change from one die to another, Automatic die changes from one die to another may be carried out swiftly and predictably.

An additional benefit is that wireless sensors are added very quickly to a press die, press or auxiliary equipment with the minimum of required installation work. This is an advantage because the majority of existing press systems are restricted when it comes to adding sensors because it is difficult to route the cabling from inside the press out to the control system. Many of the press systems are very old, which means they use hard-wired sensors, and not fieldbuses. For each sensor you wish to add, an additional pair of cabling must be added, routed to the press and then connected into the press. The advantage with a system of wireless-based sensors, means that the number of sensors may be easily increased or otherwise changed in order to improve the quality of the product.

Another benefit that of an embodiment of the invention is that information may be stored in the wireless communication module. For example a die identity (ID) may be stored in the wireless communication module. The die ID so stored can be reported to the press control system. Alternatively die ID information may be stored in a sensor or in the I/O node, depending on equipment configuration. Die identification is often done manually today, i.e., an operator checks that the correct dies have been placed in the presses and manually inputs the die ID information into a system. With manual systems ID tags can be damaged or removed by mistake, and ID information when input manually may contain errors. A die identification stored in the wireless sensor based system, also provides support for a substantially automated system, which improves quality and reduces labour costs. Storing die ID in a wireless communication module, a sensor or an I/O node also eliminates the need for a separate die identification system.

### BRIEF DESCRIPTION OF THE DRAWINGS

Embodiments of the invention will now be described, by way of example only, with particular reference to the accompanying drawings in which:
FIGURE 1 is a schematic or block diagram of an industrial press comprising a die equipped with a contactless power supply according to an embodiment of the invention;
FIGURE 2 is a schematic diagram of an associated equipment, a turntable, for a die and an industrial press equipped with a contactless power supply and a wireless control member according to another embodiment of the invention;
FIGURE 3 is a schematic or block diagram of a system including at least one industrial press comprising a die equipped with a contactless power supply according to an embodiment of the invention.
FIGURE 4 is a schematic block diagram of a system including at least one industrial press comprising a die equipped with a contactless power supply according to another embodiment of the invention;
FIGURE 5 is a schematic or block diagram of an arrangement of a contactless power supply for a die and an industrial press according to an embodiment of the invention;
FIGURE 6 is a schematic or block diagram of a contactless power supply with a plurality of contactless secondary power supplies according to another embodiment of the invention.

### DETAILED DESCRIPTION OF THE EMBODIMENTS

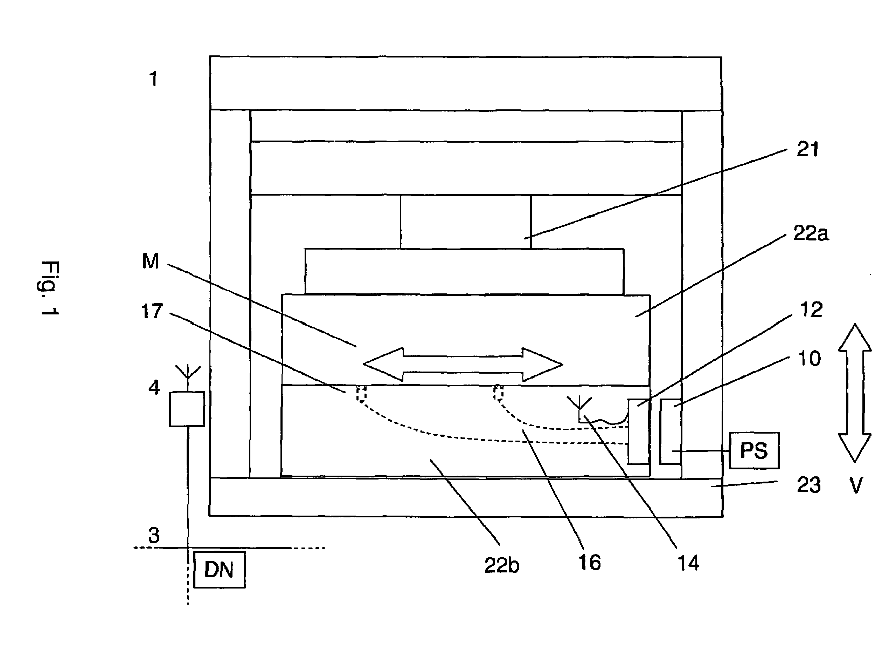

Figure 1 shows a die for use in an industrial press, which die comprises a power supply which is a wireless or contactless power supply system using e.g. magnetic or electric coupling through the air, in an embodiment of the invention.

The exemplary example of an industrial press for forming metal or plastic parts by pressing, stamping or punching a blank or workpiece may be as shown in Figure 1. A typical press 1 may comprise a structure with a press bed 23 on which a die 22 is fixed. The die or die set, when arranged for vertical operation as shown, normally comprises at least an upper and a lower half 22a, 22b. The die may also comprise additional moveable or interchangeable parts. The die is arranged so that it may be fixed in place for pressing, stamping etc., but may also be removed from the press for production changes, die changes, die repair, and so on. The press has a slide or ram 21 of some sort for exerting pressure on the die. In the exemplary example shown the press ram moves in a vertical direction v.

According to an embodiment of the invention a primary power supply 10 is arranged on or near the press so that it is in close proximity to the die, and in particular in close proximity to a secondary power supply part 12 arranged on, or in, the die. The secondary power supply 12 is arranged to power a wireless communication means, indicated in the figure by an antennae 14, for wireless communication with a wireless node such as wireless node 4 which may connected directly or via a data network 3 to a press control system and/or other control units. Primary power supply 10 may in turn be provided with power from a suitable source PS. When the die is not fixed in place, the die may be moved out of the press during die changes or repairs etc, moved for example in or out in a horizontal direction M.

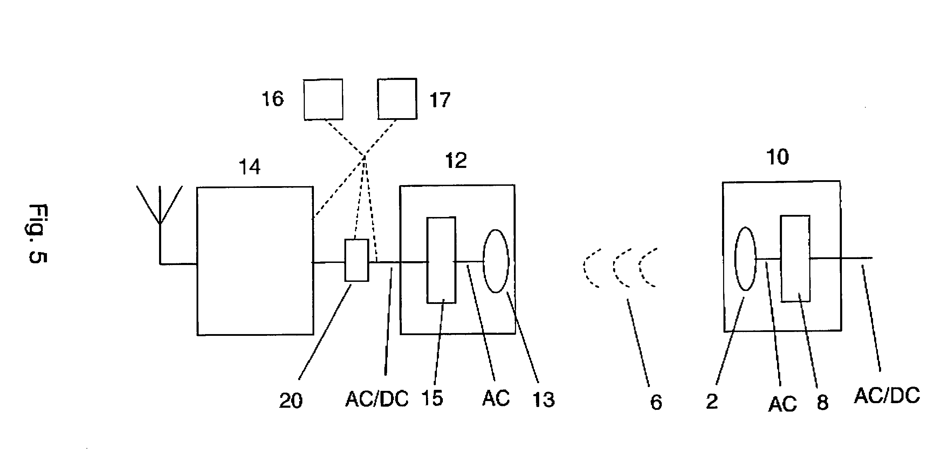

Figure 5 shows a schematic block diagram of the contactless power supply for the die. The figure shows a primary side contactless supply 10 of the electromagnetic induction type. Primary contactless power supply 10 includes a power supply module 8 which may include resonant circuits as necessary and which may include means for transforming the externally supplied power into an AC current with a suitable current and voltage for excitation of the primary coil 2. A current is induced by the field 6 in the secondary side contactless power supply 12. Secondary power supply 12 includes in the case of an induction embodiment a secondary coil 13 and a power supply module 15. The power supply module 15 may then comprise resonant circuits where necessary and means for transforming the AC current induced in coil 13 into an AC or DC power supply suitable for the wireless communication member 14. The I/O node is directly or indirectly connected to the wireless communication member 14 for data transmission. The I/O node 20 is connected to the contactless power supply directly or indirectly. I/O node 20 may be a arranged as a separate component as shown, or it may be an integrated with the secondary power supply 12, or in another embodiment integrated in a unit comprising the wireless communication member 14. The one or more sensors 17 or actuators 16 may be connected for power with any of the power supply 12, the I/O node or the wireless communication member as indicated by the dashed lines.

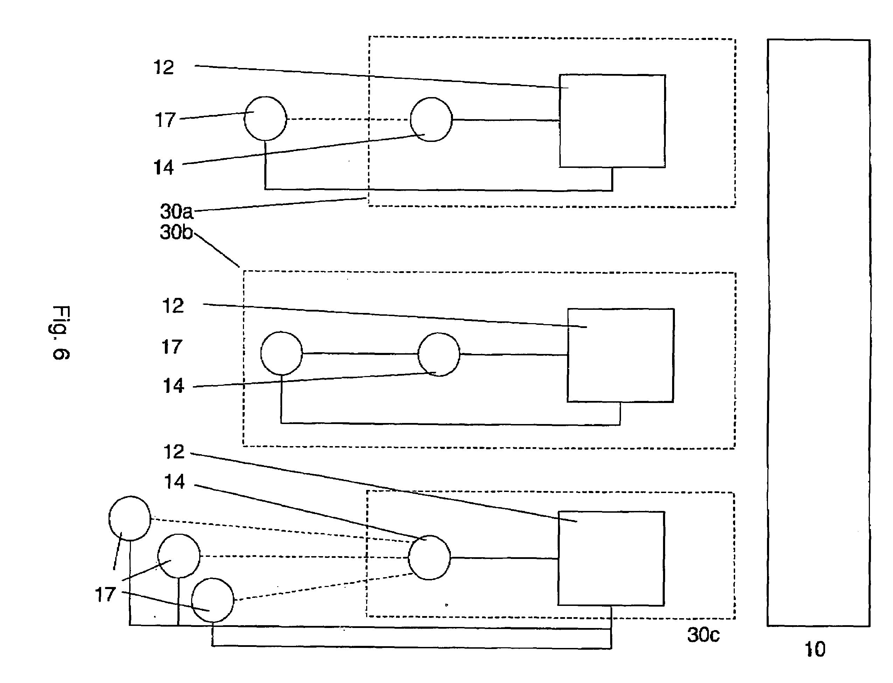

Figure 6 shows a die arranged with a plurality of secondary contactless power supplies 12 which receive power from a primary power supply 10, which is normally arranged on the press and which alternatively be arranged in another place but in close proximity to the die. The figure shows a primary power supply 10, three secondary power supplies 12. Each secondary power supply 12 powers a wireless communication member 14. A sensor 17 may be arranged together with the wireless communication member 14 and secondary power supply 12 in an integrated unit 30a as shown by the dashed line. A plurality of sensors 17 may be arranged connected to an integrated unit 30c comprising a wireless communication member 14 and a secondary power supply 12. And or a single sensor 17 or actuator may be connected to an integral wireless communication member 14 and a secondary power supply 12 unit 30a.

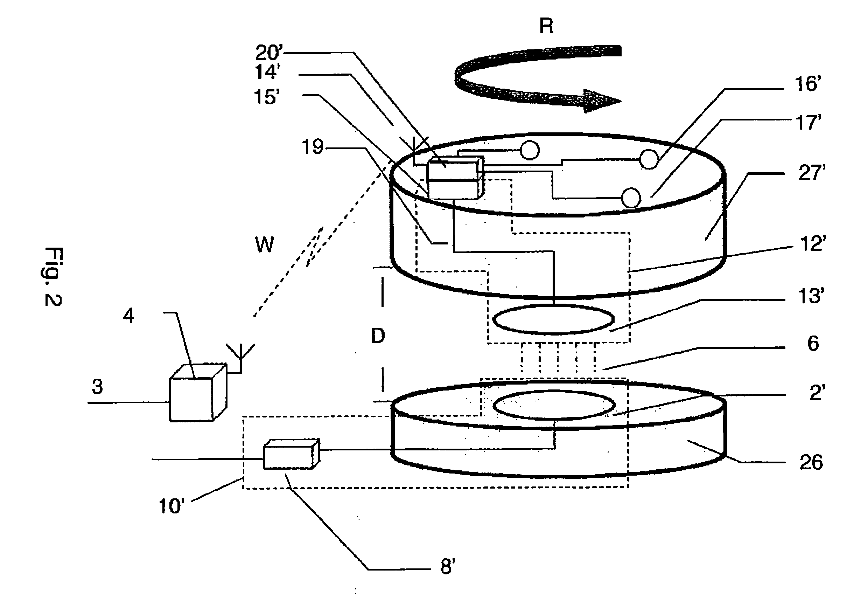

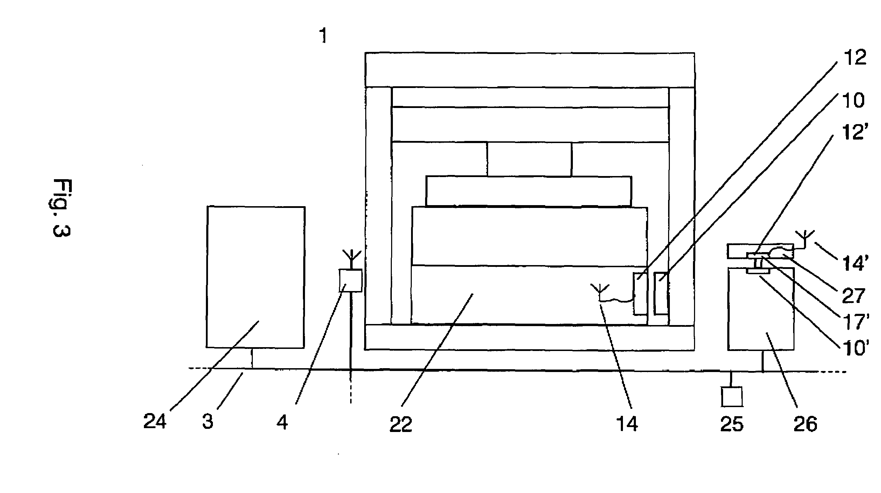

Figure 2 shows schematically details of the contactless or wireless power supply. In this example the functional elements of the wireless power supply and wireless communication member aspects of the die are shown arranged fitted to a turntable, which may also be arranged to carry out processes coordinated together with the press and the die. That is, a turntable that has in principle the same type of wireless communication member and wireless power supply system and components as the improved die. The primary power part 10'(2', 8') is attached to a non-moving part of the equipment 26, a part of the turntable. Secondary power part 12' (13', 15') is attached to the rotating part 27, the movable, rotating part of the turntable which may rotate in the direction of arrow R. The contactless power supply system shown in the fixed part 26 of the turntable is in the form of a primary power supply part 10'. The primary part 10' comprises a primary energy emitter, in this example a primary coil 2, and a power supply module 8 for conditioning or converting or otherwise adjusting an external power supply PS, typically a 110V or 220V AC supply, to supply a suitable voltage and current, which may be AC or DC, to the primary emitter 2. The primary part 10' is arranged attached to a non-moving part of the turntable 26, similar to the arrangement of the die, wherein primary part 10 is attached or arranged with a non-moving part the press, as shown in the exemplary examples of Figure 1, 3.

The movable turntable is equipped with a secondary part 12' of the contactless power supply. Secondary part 12' also has a complementary energizing means, in this case shown as a secondary coil 13', which is arranged connected 19 to a secondary power supply member 15'. Power supply member 15' on the secondary side may convert or adjust the voltage and current received by coil 13' to a suitable AC or DC current to power at least the wireless communication member 14'. Figure 2 also shows the secondary part to comprise an I/O module 20' connected to one or more sensors 17' and/or actuators 16' and (not shown in detail). I/O module 20' is powered directly as shown or indirectly (not shown) by the secondary power supply module 15' and may be arranged with a wireless communication means as indicated by the antenna 14' which is integrated in some way or else connected to a separate wireless communication means (not shown). Thus information to and/or from a sensor 17' or an I/O node of the associated equipment (turntable) may be communicated wirelessly to a control unit, or other part of a production group.

The primary power supply may be inductively coupled to the secondary part through the air, indicated by reference number 6. That is to say that the receiving coil 13' on the moveable side, the secondary side, may be arranged on or in the turntable 27. The secondary side 12' on the moveable turntable part is substantially completely separate from the primary side power supply 10' on the stationary part 26. The two parts, the primary side 10' arranged in a fixed position such as on the base, and the secondary and moveable side 12' of the turntable may be arranged with an air gap D between them.

Figure 2 also shows a wireless communication means 4 arranged connected to a press control system or data network 3. Wireless communication w may be exchanged between the network or control system wireless node 4, and the wireless communication means 14'. This may be an independent wireless communication module, a module comprised in a sensor, an actuator, or in the I/O module 20'. This is done by means of the wireless communication means arranged in the turntable and powered, supplied directly or indirectly with electrical power via the secondary power supply, 15' provided in turn by the secondary part 12'. The secondary power supply 15' may also supply power to one or more components of the turntable, such as one or more sensors 17' and/or actuators 16'.

These improvements comprising a wireless communication member and a contactless power supply mean that changing the improved die 22 of Figures 1, 3 is greatly simplified, as there are no cables, connections or electrical contacts to the die that have to be plugged/unplugged, and so also simplifying the automation of die changes greatly. In the case where an intermediate storage means such as a battery or capacitor is used to provide power in the die, the intermediate medium may be charged when the die is in the press or when the die is removed from the press and positioned, for example, in a die store.

A great practical advantage of this contactless power improvement is that the die has no protruding connection parts, which means there are no connectors, pins, or cables etc. to be damaged and rendered faulty or inoperable following a die change or during use. In addition, any of the wireless communication means 14, a sensor, an actuator, or the I/O module 20 may comprise a data storage means or memory where identification information about the die, the die ID, can be read or written.

A system according to another aspect of an embodiment of the invention including an industrial press and one or more dies equipped with a contactless power supply may also comprise other moving or rotating devices arranged to handle the workpieces such as a transfer device or a turntable for example as described above. Other associated devices may also handle a tool changer or tools or jigs etc included in a production operation or in a series of production operations. Transfer devices are typically used to transfer a workpiece from one press to another press or from one press to a subsequent operation. A robot may be used to carry out some functions of a transfer device, especially placing blanks in the die prior to a forming operation and/or removing the processed blank following a forming operation.

FIGURE 3 is a schematic or block diagram of a system including at least one industrial press with an improved die according to one aspect of the invention. It shows the press 1 and die 22 of Figure 1 similarly arranged with a contactless power supply with a primary supply part 10 on the press and a secondary supply part 12 on the die. A control unit 24 may supervise press operations and operations of other associated production equipment. The control unit may be connected to the press via a data network 3 which also comprises a wireless node 4. A controller 25 may also be comprised in the system, connected for example directly to a moveable device or via the data network or in some other way to control a function of the die or of other equipment (eg 26) associated with press operations. Sensor information from the die 22 may be wirelessly communicated by wireless communication means 14 via wireless node 4 and data network 3 to the control unit 24. information from or to an actuator or from the I/O node on the die may also be communicated. Associated production equipment such as a turntable may also comprise contactless power supplies. A turntable 26 with a rotating table 27 may comprise a primary power part 10' and a secondary power part 12' arranged on the rotating part 27 of the table. It may also be equipped with a wireless communication member 14' to communicate sensor and/or actuator information between the turntable and the control unit supervising the press operations. Any of a plurality of peripheral devices with a contactless power supply 10', 12' may be used for carrying out operations in association with an industrial press and an improved die with a contactlessly powered wireless communication member.

Wireless communications between the wireless communication unit arranged on the die and a control unit, or a wireless node of a data network to which a control unit is connected, may be carried out using any suitable radio protocol.

Contactless transfer of energy to the die is not limited to the electrical induction method described. The invention may also be practised using other non-contact means for energy transfer based on such media as compressed air, laser or other focused light source, acoustic waves. As an intermediate power source a compressed air micro turbine or similar suitably connected to the secondary power supply in the die may be used to provide electrical power to sensor, wireless communication member etc independently of external power supply connections. The advantage of this embodiment is that it such a die may be completely self sufficient. A compressed air tank or container may be charged when the die is in the press or when the die is removed from the press, eg in a die store. As compressed air is often installed and available to existing industrial presses a tank comprised in a die may also alternatively be charged in the press.

Contactless transfer of energy to the die is also not limited to a direct power supply by electrical induction as described. The die may also comprise one or more batteries or capacitors for indirect powering by the contactless power supply. One or more such batteries or capacitors may be arranged in the die to be charged by the contactless power system, thus storing energy in an intermediate stage. In this way a contactless power supply may power a wireless communication module, a sensor or the I/O node etc indirectly.

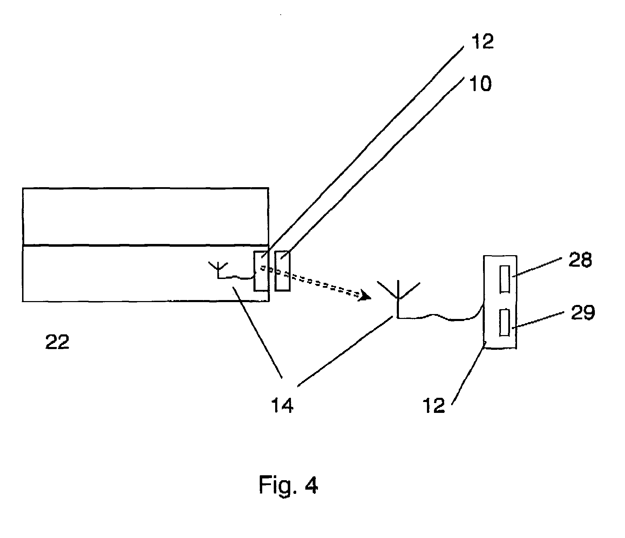

Figure 4 illustrates schematically a capacitive device 29 or a rechargeable battery device 28 comprised in the secondary power part 12 of the contactless power supply arranged on the die 22. The contactless power device, which may be inductive or other energy transfer means, charges the capacitive or battery device. The capacitive or battery device in turn powers a wireless communication member directly or via a sensor, adaptor, or via the I/O node. In an advantageous embodiment charging of a battery or capacitive intermediate storage device can also be carried out outside of the press and a charging device equivalent to primary power supply 10 may be arranged, for example, in a die storage area. Thus dies may be charged after removal from the press. 10 can be located inside the press or outside where the dies are stored.

The industrial press or automation application with a die according to an embodiment of the present invention may applied to operations such forming, pressing or stamping metal parts as well as automobile parts formed by operations such as plastic injection moulding, plastic compression and/or reaction moulding or extrusion.

A contactless power supply enabled without cabling on the moveable die part or moveable die is very advantageous. It means that any sensor or sensors for example for determining position of a moulding or a position of an ejector pin in the die may be more efficiently and more economically provided with a power supply connecting or attaching power cables. Wear on power cabling to the die, and maintenance and/or repairs required by worn cabling or connections, is eliminated.

It should be noted that while the above describes exemplifying embodiments of the invention, there are several variations and modifications which may be made to the disclosed solution without departing from the scope of the present invention as defined in the appended claims.

## Claims

1. A mould or die for an industrial press for forming, stamping or pressing of metal or plastic parts, which said die is arranged to be mounted in and removed from said press,
**characterised in that** said die is arranged with at least one wireless communication member (14) and a contactless power supply (12), which wireless communication member is arranged powered directly or indirectly by the contactless power supply.

2. A die according to claim 1, wherein the contactless power supply comprises an intermediate power storage means (28, 29).

3. A die according to claim 2, wherein the intermediate power storage means comprises capacitive power storage means (28) which is powered by the contactless power supply.

4. A die according to claim 2 or 3, wherein the intermediate power storage means comprises a rechargeable battery (29) which is powered by the contactless power supply.

5. A die according to any of claim 2-4, wherein the intermediate power storage means comprises a vessel containing compressed air arranged to drive an electrical generator or turbine means comprised arranged with or in the die.

6. A die according to claim 1, wherein said die comprises one or more sensors (17) connected to the wireless communication member.

7. A die according to claim 1 or 6, wherein said die comprises at least one actuator (16) connected to the wireless communication member (14).

8. A die according to claim 6 or 7, any of the one or more actuators and/or sensors are connected to one wireless communication member (30c).

9. A die according to any of claims 1-8, wherein any of one or more actuators and/or sensors are powered directly or indirectly by the contactless power supply.

10. A die according to claim 1, wherein said die comprises at least one I/O node (20) connected to the wireless communication member (14).

11. A die according to claim 10, wherein said die comprises at least one I/O node powered directly or indirectly by the contactless power supply.

12. A die according to claim 10, wherein any of the one or more actuators and/or sensors are connected via the I/O node to the at least one wireless communication member.

13. A die according to any of claims 1-12, wherein at least one wireless communication means is connected to at least one sensor means (17) and powered directly or indirectly by the contactless power supply.

14. A die according to any of claims 1-13, wherein at least one wireless communication means is connected to a plurality of sensors (30c).

15. A die according to claim 1, wherein the contactless power supply (12) is powered directly or indirectly by an electromagnetic induction device (13, 15).

16. A die according to claim 15, wherein said die comprises one or more coils (13, 15) for induction of a time-varying voltage arranged connected relative to the contactless power supply (12) arranged with said die.

17. A die according to any of claims 1-16, wherein said die comprises a plurality of contactless power supplies 12 arranged powering a wireless communication member (14) and at least one sensor (17).

18. A die according to claim 17, wherein the wireless communication member is arranged in the same unit (30a, 30b) as a secondary contactless power supply (12).

19. A die according to claim 18, wherein a sensor (17) is arranged in the same unit (30b) a secondary contactless power supply.

20. A die according to any of claims 1-19, wherein said die comprises a contactless transmission of energy by means of any from the group of; compressed air flow, laser or other focused light source, acoustic waves.

21. A die according to claim 1, wherein the wireless communication member (14) is compatible with a wireless radio protocol.

22. A die according to claim 1, wherein the wireless communication member comprises means for bi-directional communication.

23. A die according to claim 1, wherein the wireless communication member (14) of said die (22) is arranged with means for wireless transmission of data to a data network (3) and/or a control unit (24, 25) from at least one sensor and/or actuator (17, 16) and/or I/O node (20) arranged with said die.

24. A die according to claim 1, wherein any of a sensor, actuator, I/O node or wireless communication means comprises a memory storage means which may be written to and/or read from.

25. A method for supplying electrical power to a mould or die mounted in an industrial press for forming, stamping or pressing of metal or plastic parts, which said die is arranged to be mounted in and removed from a said press, **characterised by** providing electrical power by means of a contactless power supply (12) directly or indirectly to at least one wireless communication member (14) arranged on the die (22).

26. A method according to claim 25, comprising providing electrical power indirectly from the contactless power supply to at least one wireless communication member using an intermediate power storage means (28, 29).

27. A method according to claim 26, comprising providing electrical power indirectly from a capacitive power storage means (28) which is powered or charged by the contactless power supply.

28. A method according to claim 26, comprising providing electrical power indirectly from an rechargeable battery (29) which is charged or powered by the contactless power supply.

29. A method according to claim 26, comprising providing electrical power indirectly from an intermediate power storage means comprising a vessel containing compressed air arranged to drive a generator or turbine means comprised arranged with or in the die.

30. A method according to any of claims 26- 29 comprising charging the intermediate storage device when said die is not mounted in the press.

31. A method according to any of claims 26- 29 comprising charging the intermediate storage device when said die is not mounted in the press by means of a primary contactless power supply (10).

32. A method according to claim 25, comprising providing electrical power to a wireless communication means via the I/O module (20) arranged on the die directly or indirectly from the contactless power supply.

33. A method according to claim 25, comprising providing electrical power directly or indirectly from the contactless power supply to a wireless communication means connected to at least one sensor means (17).

34. A method according to claim 25, comprising reading or writing information dependent on said die to a memory means of at least one wireless communication member (14) arranged on the die (22).

35. A method according to claim 34, comprising reading or writing information dependent on said die to a memory means comprised in any from the group of: an I/O node, a sensor, an actuator.

36. A system comprising at least one press and a mould or die for forming, stamping or pressing of metal or plastic parts, which said die is arranged to be mounted in and removed from a said press, the system further comprising a control unit for controlling operations with said press, **characterised in that** said die is arranged with a wireless communication member (14) and a contactless power supply means (12), which contactless power supply means is arranged for direct or indirect power supply to the wireless communication member.

37. A system according to claim 36, wherein the contactless power supply for at least one die comprises an intermediate power storage means (28, 29).

38. A system according to claim 37, wherein the intermediate power storage means comprises capacitive power storage means (28) which is powered or charged by the contactless power supply.

39. A system according to claim 37 or 38, wherein the intermediate power storage means comprises a rechargeable battery (29) which is charged or powered by the contactless power supply.

40. A system according to claim 36, wherein said die comprises one or more sensors (17) at least one of which is connected to the wireless communication member (14).

41. A system according to claim 36, wherein said die comprises at least one actuator (16) connected to the wireless communication member.

42. A system according to claim 40 or 41, wherein any of the one or more actuators and/or sensors are connected to one wireless communication member.

43. A system according to any of claims 36-42, wherein any of one or more actuators and/or sensors are powered directly or indirectly by the contactless power supply.

44. A system according to claim 36, wherein at least one said die comprises at least one I/O node (20) connected to the wireless communication member (14).

45. A system according to claim 44, wherein the wireless communication member (14) of the press die is arranged for wireless communication with at least one of said control unit (24, 25), said control unit via a wireless node (4) of a data network (3) or said control unit via a wireless node.

46. A system according to any of claims 36-45, wherein the wireless communication member (14) and the I/O node are each arranged in a separate unit.

47. A system according to any of claims 36-45, wherein at least one wireless communication member (14) and the I/O node are both arranged in an integral unit.

48. A system according to any of claims 36-45, wherein at least one wireless communication member (14) and at least one sensor are arranged in an integral unit (30b).

49. A system according to any of claims 36-48, wherein any of a sensor, actuator, I/O node or wireless communication means of at least one said die comprises a memory storage means which may be written to and/or read from.

50. A system according to claim 49, comprising means for reading or writing information dependent on said die to a memory means of at least one wireless communication member (14) arranged on the said die (22).

51. A system according to claim 50, wherein the press is arranged with a contactless power supply means (10) arranged on or near the press.

52. A system according to claim 51, wherein said die is arranged mounted in the press such that there is no direct contact between the primary contactless power supply means (10) on the press and the secondary power supply means (12) arranged on or in the die.

53. A system according to claim 36, wherein at least one said die is arranged mounted in the press such that there is an air gap between the primary contactless power supply means (10) and the secondary power supply means (12) arranged on said die.

54. A system according to any of claims 36-53, wherein said press is arranged with at least one other equipment to carry out operations associated with said press with said die, the equipment comprising a wireless communication member (14') powered by a contactless power supply (12'), which equipment may be any from the list of: transfer system, turntable (26), automatic tool changing system.

55. A system according to claim 54, wherein the at least one other equipment comprises any from the group of: at least one sensor (17'), actuator (16'), I/O node (20').

56. A system according to any of claims 36-55, wherein said die is arranged with means (14) for wireless communication carried out using a wireless radio protocol.

57. Use of a die according to any of claims 1-24 for operations with an automation application for forming, pressing or stamping in an industrial or commercial installation or place of work.

58. Use of a system according to any of claims 25-56 to carry out operations with a press and an automation installation and/or a robot in an industrial or commercial installation to carry out any from the list of: pressing, stamping or punching metal parts for automobiles, forming, moulding or pressing plastic parts for automobiles.
